# EUROPÄISCHE PATENTSCHRIFT

(11) **EP 1 881 999 B1**
(45) Veröffentlichungstag und Bekanntmachung des Hinweises auf die Patenterteilung: **31.12.2008**
(21) Anmeldenummer: 06724803.9
(22) Anmeldetag: 11.05.2006
(51) Int. Cl.: C08F 2/38, C08K 5/5419, C08F 8/42

(54) **VERFAHREN ZUR HERSTELLUNG VON SILIKON-HALTIGEN POLYMERISATEN**
PROCESS FOR PREPARING SILICONE-CONTAINING ADDITION POLYMERS
PROCEDE DE PRODUCTION DE POLYMERES RENFERMANT DES SILICONES

(30) Priorität: 20.05.2005 DE 102005023404
(43) Veröffentlichungstag der Anmeldung: 30.01.2008
(73) Patentinhaber: Wacker Chemie AG, 81737 München (DE)
(72) Erfinder: STARK, Kurt, 91284 Neuhaus (DE); OCHS, Christian, 84489 Burghausen (DE)
(74) Vertreter: Schuderer, Michael
(86) Internationale Anmeldenummer: PCT/EP2006/004452
(87) Internationale Veröffentlichungsnummer: WO 2006/122707

(56) Entgegenhaltungen:
- WO-A-20/04013187
- WO-A-20/04013190

## Beschreibung

Die Erfindung betrifft ein Verfahren zur Herstellung von Silikon-haltigen Polymerisaten, wobei ethylenisch ungesättigte Monomere in Gegenwart eines Reglers aus der Gruppe der aldehyd-funktionellen Silikone radikalisch polymerisiert werden.

Aus dem Stand der Technik sind eine Reihe von Verfahren bekannt, bei denen Organopolymere mit Silikonen in der Weise modifiziert werden, dass die Monomere in Gegenwart eines Silikons polymerisiert werden.

In der EP-B 771826 werden wässrige Bindemittel für Coatings und Klebemittel auf der Basis von Emulsionspolymerisaten von Vinylestern, Acryl- oder Methacrylsäureestern oder Vinylaromaten beschrieben, welche als Vernetzer Polysiloxane mit ungesättigten Resten, beispielsweise Vinyl-, Acryloxy- und Methacryloxy-Gruppen, enthalten. Dabei wird das organische Monomer emulgiert und polymerisiert und nach einem bestimmten Zeitpunkt wird während der Reaktion das Silikon zugesetzt. In der EP-A 943634 werden wässrige Latices zur Verwendung als Beschichtungsmittel beschrieben, welche durch Copolymerisation von ethylenisch ungesättigten Monomeren in Gegenwart eines Silanolgruppen enthaltenden Silikonharzes hergestellt werden. Es bilden sich dabei interpenetrating networks (IPN) zwischen den Polymerketten und Polysiloxanketten. Die EP-A 1095953 beschreibt mit Silikon gepfropfte Vinylcopolymere, wobei ein Carbosiloxan-Dendrimer auf dem Vinylpolymerisat aufgepfropft ist.

Der Einsatz von vinylfunktionalisierten Silikonen ist im Stand der Technik ebenfalls bekannt. Meist werden die Vinylsilikone mit H-Siloxanen (Organohydrogenpolysiloxane) mittels eines Katalysators (meist Pt-Verbindung) im Zuge einer Hydrosilylierungsreaktion umgesetzt, was beispielsweise in der EP-A 545591 beschrieben wird.

Polysiloxanvernetzte Styrol-Butadien-Copolymere sind aus der US-A 5086141 bekannt, wobei die vernetzten Copolymere nach dem Suspensions polymerisations verfahren hergestellt werden. Die US-A 5468477 betrifft Vinylsiloxanpolymerisate, welche durch Polymerisation in Gegenwart von Mercapto-funktionellem Silikon hergestellt werden. Die US-A 5789516 beschreibt den Einsatz einer Initiatorkombination aus Carbonyl-funktionellem Silikon und Kupfersalz für die Herstellung von blockartigen Silikonorganocopolymeren.

Die aus dem Stand der Technik bekannten Möglichkeiten zur Herstellung von Silikonorganocopolymeren weisen etliche Nachteile auf. Hydrosilylierungsreaktionen von H-Siloxanen mit Vinyl-Silikonen verlaufen zum Beispiel meist nicht quantitativ und erfordern immer die Anwesenheit von Pt-Katalysator, der das Produkt verunreinigt und Schwermetalle einbringt. Ebenso verhält es sich mit Carbonyl-funktionellen Silikonen, die als Initiator verwendet werden. Das hier erforderliche Kupfer-Salz trägt wiederum Schwermetalle in das Endprodukt ein und führt zu Verunreinigungen, die nicht oder nur sehr schlecht abgetrennt werden können. Merkaptogruppenhaltige Silikone werden als Regler bei Polymerisationsreaktionen mit organischen Monomeren zur Herstellung von Silikonorganocopolymeren ebenfalls beschrieben. Deren Einsatz führt zu vielen unerwünschten Nebenreaktionen an der Merkaptogruppe (beispielsweise Oxidations- oder Additionsreaktionen). Nachteilig ist hier ferner der Geruch dieser Verbindungen, in manchen Fällen sind diese sogar ökologisch bedenklich. Daneben wird die Polymerisationsgeschwindigkeit deutlich herabgesetzt, was sogar bis zu einem vollständigen Erliegen der Polymerisation führen kann, falls restlicher Schwefel enthalten ist.

Kondensationsreaktionen und polymeranaloge Reaktionen an funktionalisierten Silikonen mit organischem Polymer sind meist nicht vollständig und es verbleiben nicht umgesetzte Edukte im Endprodukt. Grund dafür ist nicht zuletzt die Unverträglichkeit von Silikonen mit organischen Polymeren. Bei der Emulsionspolymerisation ist ein gravierender Nachteil beispielsweise die unzureichende Anknüpfung und Copolymerisation von Silikonmakromeren, die mindestens eine ungesättigte polymerisierbare Gruppe enthalten, mit organischen Monomeren. In der EP-A 1354900 wird dies mittels Einsatzes eines definierten Silikongemisches vermieden. In Lösung hingegen zeigen derartige Systeme bedeutend bessere Polymerisationsneigung, so dass bei dem Einsatz von mehrfach ungesättigten Silikonmakromeren vernetzte Produkte resultieren, die für viele Anwendungen unbrauchbar sind. In der WO-A 03/085035 wird dies dadurch vermieden, dass in Gegenwart eines Lösungsmittelgemisches polymerisiert wird.

Es bestand folglich die Aufgabe, Silikon-haltige Polymerisate zur Verfügung zu stellen, welche die oben genannten Nachteile wie unerwünschte Vernetzung, Migrationsneigung, Metallverunreinigung nicht aufweisen.

Gegenstand der Erfindung ist ein Verfahren zur Herstellung von Silikon-haltigen Polymerisaten mittels radikalischer Polymerisation von einem oder mehreren ethylenisch ungesättigten, organischen Monomeren, in Gegenwart von Kupfer-freiem Radikalstarter und einem oder mehreren Polymerisationsreglern, dadurch gekennzeichnet, dass als Polymerisationsregler verzweigte, cyclische oder dreidimensional vernetzte Polysiloxane mit mindestens 2 Siloxanwiederholungseinheiten, welche mindestens eine endständige und/oder kettenständige Aldehydgruppe enthalten, eingesetzt werden oder Silikone der allgemeinen Formel (I) mit endständiger Aldehydgruppe und/oder der allgemeinen Formel (II) mit kettenständiger Aldehydgruppe:

HCO(CH₂)₂-SiR₂O-[SiR₂O-]ₓ-SiR₂-(CH₂)₂-CHO (I),

R₃Si-O-[SiR₂O-]_{y}-[Si(HCO(CH₂)₂)RO]_{z}-SiR₃ (II),

wobei
jeweils R gleich oder verschieden ist, und einen einwertigen, gegebenenfalls substituierten, Alkylrest oder Alkoxyrest mit jeweils 1 bis 18 C-Atomen bedeutet, x ≥ 1 ist, y ≥ 0 ist, z ≥ 1 ist.

Beispiele für die Reste R sind Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest, Hexylreste wie der n-Hexylrest, Heptylreste wie der n-Heptylrest, Octylreste wie der n-Octylrest und iso-Octylreste wie der 2,2,4-Trimethylpentylrest, Nonylreste wie der n-Nonylrest, Decylreste wie der n-Decylrest, Dodecylreste wie der n-Dodecylrest, und Octadecylreste wie der n-Octadecylrest, Cycloalkylreste wie Cyclopentyl-, Cyclohexyl-, Cycloheptyl- und Methylcyclohexylreste.
Bevorzugt handelt es sich bei dem Rest R um einen einwertigen Alkylrest mit 1 bis 6 Kohlenstoffatomen, wie Methyl-, Ethyl-, n-Propyl-, Isopropyl-, n-Butyl-, sec-Butyl, Amyl- und Hexyl-Rest, wobei der Methylrest besonders bevorzugt ist. Bevorzugte Alkoxyreste R sind solche mit 1 bis 6 Kohlenstoffatomen wie Methoxy-, Ethoxy-, Propoxy- und n-Butoxyrest, welche gegebenenfalls noch mit Oxyalkylenresten wie Oxyethylen- oder Oxymethylen-Resten substituiert sein können.
Besonders bevorzugt werden der Methoxy- und Ethoxyrest.
Die genannten Alkylreste und Alkoxyreste R können gegebenenfalls auch substituiert sein, beispielsweise mit Halogen, epoxyfunktionellen Gruppen, Carboxygruppen, Ketogruppen, Enamingruppen, Aminogruppen, Aminoethylaminogruppen, iso-Cyanatogruppen, Aryloxygruppen, Alkoxysilylgruppen und Hydroxygruppen.

Im allgemeinen ist x von 1 bis 10000, vorzugsweise 2 bis 1000, besonders bevorzugt 10 bis 500.
Im allgemeinen ist y von 0 bis 1000, vorzugsweise 2 bis 500.
Im allgemeinen ist z von 1 bis 1000, vorzugsweise 1 bis 100.

Besonders bevorzugt ist y+z von 1 bis 1000, am meisten bevorzugt 10 bis 500, und das Verhältnis y : z ist besonders bevorzugt 15 : 1 bis 50 : 1.

Als ethylenisch ungesättigte, organische Monomere geeignet sind ein oder mehrere Monomere aus der Gruppe umfassend Vinylester von unverzweigten oder verzweigten Alkylcarbonsäuren mit 1 bis 18 C-Atomen, Acrylsäureester oder Methacrylsäureester von verzweigten oder unverzweigten Alkoholen oder Diolen mit 1 bis 18 C-Atomen, ethylenisch ungesättigte Mono- und Di-Carbonsäuren, deren Salze, sowie deren Amide bzw. N-Methylolamide und Nitrile, ethylenisch ungesättigte Sulfonsäuren sowie deren Salze, ethylenisch ungesättigte heterocyclische Verbindungen, Alkylvinylether, Vinylketone, Diene, Olefine, Vinylaromaten, und Vinylhalogenide.

Geeignete Vinylester sind solche von Carbonsäuren mit 1 bis 13 C-Atomen. Bevorzugt werden Vinylacetat, Vinylpropionat, Vinylbutyrat, Vinyl-2-ethylhexanoat, Vinyllaurat, 1-Methylvinylacetat, Vinylpivalat und Vinylester von α-verzweigten Monocarbonsäuren mit 9 bis 13 C-Atomen, beispielsweise VeoVa9^{R} oder VeoVa10^{R} (Handelsnamen der Firma Resolution). Besonders bevorzugt ist Vinylacetat.

Geeignete Monomere aus der Gruppe Acrylsäureester oder Methacrylsäureester sind Ester von unverzweigten oder verzweigten Alkoholen oder Diolen mit 1 bis 15 C-Atomen. Bevorzugte Methacrylsäureester oder Acrylsäureester sind Methylacrylat, Methylmethacrylat, Ethylacrylat, Ethylmethacrylat, Propylacrylat, Propylmethacrylat, iso- oder n-Butylacrylat, n-Butylmethacrylat, t-Butylacrylat, iso- oder t-Butylmethacrylat, 2-Ethylhexylacrylat, Benzyl(meth)acrylat, 2-Hydroxyethyl(meth)acrylat, Hydroxypropyl(meth)acrylat, n-Hexyl(meth)acrylat, Isooctyl(meth)acrylat, iso-Decyl(meth)acrylat, Lauryl(meth)acrylat, Methoxyethyl(meth)acrylat, Phenoxyethyl(meth)acrylat, Isobornyl(meth)acrylat, Stearyl(meth)acrylat, Cyclohexyl-(meth)acrylat, α-Chloracrylester, α-Cyanacrylester. Besonders bevorzugt sind Methylacrylat, Methylmethacrylat, n-Butylacrylat, t-Butylacrylat und 2-Ethylhexylacrylat.
Weitere Beispiele sind funktionalisierte (Meth)acrylate und funktionalisierte Allyl- oder Vinylether, insbesondere Epoxyfunktionelle wie Glycidylacrylat, Glycidylmethacrylat, Allylglycidether, Vinylglycidether, oder Hydroxyalkyl-funktionelle wie Hydroxyethyl(meth)acrylat.

Beispiele für geeignete ethylenisch ungesättigte Mono- und Di-Carbonsäuren, deren Salze sowie deren Amide bzw. N-Methylolamide und Nitrile sind Acrylsäure, Methacrylsäure, Crotonsäure, Itaconsäure, Fumarsäure, Maleinsäure, Acrylamid, N-Methylolacrylamid, N-Methylolmethacrylamid und Acrylnitril, Methacrylnitril. Beispiele für ethylenisch ungesättigte Sulfonsäuren sind Vinylsulfonsäure und 2-Acrylamido-2-methyl-propansulfonsäure. Geeignete ethylenisch ungesättigte heterocyclische Verbindungen sind N-Vinylpyrrolidon, Vinylpyridin, N-Vinylimidazol, N-Vinylcaprolactam. Geeignet sind auch kationische Monomere wie Diallyldimethylammoniumchlorid (DADMAC), 3-Trimethylammoniumpropyl(meth)acrylamidchlorid (MAPTAC) und 2-Trimethylammoniumethyl(meth)acrylatchlorid.

Als Vinylaromaten bevorzugt sind Styrol, α-Methylstyrol und Vinyltoluol. Bevorzugte Vinylhalogenide sind Vinylchlorid, Vinylidenchlorid, Vinylfluorid. Die bevorzugten Olefine sind Ethylen, Propylen und die bevorzugten Diene sind 1,3-Butadien und Isopren.

Bevorzugte Alkylvinylether sind Ethylvinylether, n-Butylvinylether, iso-Butylvinylether, tert-Butylvinylether, Cyclohexylvinylether, Octadecylvinylether, Hydroxybutylvinylether, Cyclohexandimethanolmonovinylether. Weitere geeignete ethylenisch ungesättigte Monomere sind Vinylmethylketon, N-Vinylformamid, N-Vinyl-N-Methylacetamid, Vinylcarbazol, Vinylidencyanid.

Geeignete Monomere sind auch ethylenisch ungesättigte Silane. Bevorzugt sind γ-Acryl- und γ-Methacryloxypropyltri(alkoxy)silane, α-Methacryloxymethyltri(alkoxy)silane, γ-Methacryloxypropyl-methyldi(alkoxy)silane, Vinylalkyldi(alkoxy)silane und Vinyltri(alkoxy)silane, wobei als Alkoxygruppen beispielsweise Methoxy-, Ethoxy-, Methoxyethylen, Ethoxyethylen-, Methoxypropylenglykolether- bzw. Ethoxypropylenglykolether-Reste eingesetzt werden können. Beispiele für bevorzugte silanhaltige Monomere sind Vinyltrimethoxysilan, Vinylmethyldimethoxysilan, Vinyltriethoxysilan, Vinylmethyldiethoxysilan, Vinyltris-(1-methoxy)-isopropoxysilan, Methacryloxypropyl-tris(2-methoxyethoxy)silan, 3-Methacryloxypropyltrimethoxysilan, 3-Methacryloxypropylmethyldimethoxysilan und Methacryloxymethyltrimethoxysilan sowie deren Gemische.

Weitere Beispiele für geeignete Monomere sind vorvernetzende Comonomere wie mehrfach ethylenisch ungesättigte Comonomere, beispielsweise Divinyladipat, Divinylbenzol, Diallylmaleat, Allylmethacrylat, Butandioldiacrylat oder Triallylcyanurat, oder nachvernetzende Comonomere, beispielsweise Acrylamidoglykolsäure (AGA), Methylacrylamidoglykolsäuremethylester (MAGME), N-Methylolacrylamid (NMA), N-Methylolmethacrylamid, N-Methylolallylcarbamat, Alkylether wie der Isobutoxyether oder Ester des N-Methylolacrylamids, des N-Methylolmethacrylamids und des N-Methylolallylcarbamats.

Die Polymerisation der ethylenisch ungesättigten, organischen Monomere kann auch in Gegenwart von Silikonmakromer erfolgen. Geeignete Silikonmakromere sind lineare, verzweigte, cyclische und dreidimensional vernetzte Silikone (Polysiloxane) mit mindestens 5 Siloxanwiederholungseinheiten und mit mindestens einer radikalisch polymerisierbaren funktionellen Gruppe. Vorzugsweise beträgt die Kettenlänge 10 bis 10000 Siloxanwiederholungseinheiten. Ethylenisch ungesättigte Gruppen wie Alkenylgruppen werden als polymerisierbare, funktionelle Gruppen bevorzugt.

Bevorzugte Silikonmakromere sind Silikone mit der allgemeinen Formel (III) R¹ₐR₃₋ₐSiO(SiR₂O)ₙSiR₃₋ₐR¹ₐ, wobei R gleich oder verschieden ist, und einen einwertigen, gegebenenfalls substituierten, Alkylrest oder Alkoxyrest mit jeweils 1 bis 18 C-Atomen bedeutet, R¹ eine polymerisierbare Gruppe bedeutet, a 0 oder 1 ist, und n = 5 bis 10000 beträgt.

In der allgemeinen Formel R¹ₐR₃₋ₐSiO(SiR₂O)ₙSiR₃₋ₐR¹ₐ (III) sind Beispiele für Reste R Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest, Hexylreste wie der n-Hexylrest, Heptylreste wie der n-Heptylrest, Octylreste wie der n-Octylrest und iso-Octylreste wie der 2,2,4-Trimethylpentylrest, Nonylreste wie der n-Nonylrest, Decylreste wie der n-Decylrest, Dodecylreste wie der n-Dodecylrest, und Octadecylreste wie der n-Octadecylrest, Cycloalkylreste wie Cyclopentyl-, Cyclohexyl-, Cycloheptyl- und Methylcyclohexylreste. Bevorzugt handelt es sich bei dem Rest R um einen einwertigen Kohlenwasserstoffrest mit 1 bis 6 Kohlenstoffatomen, wie Methyl-, Ethyl-, n-Propyl-, Isopropyl-, n-Butyl-, sec-Butyl, Amyl- und Hexyl-Rest, wobei der Methylrest besonders bevorzugt ist.

Bevorzugte Alkoxyreste R sind solche mit 1 bis 6 Kohlenstoffatomen wie Methoxy-, Ethoxy-, Propoxy- und n-Butoxyrest, welche gegebenenfalls noch mit Oxyalkylenresten wie Oxyethylen- oder Oxymethylen-Resten substituiert sein können. Besonders bevorzugt werden der Methoxy- und Ethoxyrest. Die genannten Alkylreste und Alkoxyreste R können gegebenenfalls auch substituiert sein, beispielsweise mit Halogen, Mercaptogruppen, epoxyfunktionellen Gruppen, Carboxygruppen, Ketogruppen, Enamingruppen, Aminogruppen, Aminoethylaminogruppen, iso-Cyanatogruppen, Aryloxygruppen, Alkoxysilylgruppen und Hydroxygruppen.

Geeignete polymerisierbare Gruppen R¹ sind Alkenylreste mit 2 bis 8 C-Atomen. Beispiele für solche polymerisierbaren Gruppen sind die Vinyl-, Allyl-, Butenyl-, sowie Acryloxyalkyl- und Methacryloxyalkyl-Gruppe, wobei die Alkylreste 1 bis 4 C-Atome enthalten. Bevorzugt werden die Vinylgruppe, 3-Methacryloxypropyl-, (Meth)Acryloxymethyl- und 3-Acryloxypropyl-Gruppe.

Besonders bevorzugt werden α,ω-Divinyl-Polydimethylsiloxane, α,ω-Di-(3-acryloxypropyl)-Polydimethylsiloxane, α,ω-Di-(3-methacryloxypropyl)-Polydimethylsiloxane. Bei den nur einfach mit ungesättigten Gruppen substituierten Silikonen sind α-Monovinyl-Polydimethylsiloxane, α-Mono-(3-acryloxypropyl)-Polydimethylsiloxane, α-Mono-(acryloxymethyl)-Polydimethylsiloxane, α-Mono-(methacryloxymethyl)-Polydimethylsiloxane, α-Mono-(3-methacryloxypropyl)-Polydimethylsiloxane besonders bevorzugt. Bei den monofunktionellen Polydimethylsiloxanen befindet sich am anderen Kettenende ein Alkyl- oder Alkoxyrest, beispielsweise ein Methyl- oder Butylrest.

Besonders bevorzugt sind auch Gemische von linearen oder verzweigten Divinyl-Polydimethylsiloxanen mit linearen oder verzweigten Monovinyl-Polydimethylsiloxanen und/oder unfunktionalisierten Polydimethylsiloxanen (letztere besitzen keine polymerisierbare Gruppe). Die Vinylgruppen befinden sich am Kettenende. Beispiele für solche Gemische sind Silikone der lösemittelfreien Dehesive^{®}-6-Reihe (verzweigt) oder Dehesive^{®}-9-Reihe (unverzweigt) der Wacker-Chemie GmbH. Bei den binären oder ternären Gemischen beträgt der Anteil der unfunktionalisierten Polydialkylsiloxane maximal bis zu 15 Gew.-%, vorzugsweise bis zu 5 Gew.-%; der Anteil der monofunktionellen Polydialkylsiloxane bis zu 50 Gew.-%; und der Anteil der difunktionellen Polydialkylsiloxane mindestens 50 Gew.-%, vorzugsweise mindestens 60 Gew.-%, jeweils bezogen auf das Gesamtgewicht des Silikonmakromers.

Am meisten bevorzugt als Silikonmakromere werden α,ω-Divinyl-Polydimethylsiloxane, α-Mono-(3-methacryloxypropyl)-Polydimethylsiloxane und α,ω-Di-(3-methacryloxypropyl)-Polydimethylsiloxane. Die Silikonmakromere werden im allgemeinen in einer Menge von 0.1 bis 40 Gew.-%, vorzugsweise 1.0 bis 20 Gew.-%, jeweils bezogen auf das Gesamtgewicht der Monomere, eingesetzt.

Besonders bevorzugt werden Monomere oder Gemische, welche ein oder mehrere Monomere enthalten, aus der Gruppe umfassend Vinylacetat, Vinylester von α-verzweigten Monocarbonsäuren mit 9 bis 11 C-Atomen, Vinylchlorid, Ethylen, Methylacrylat, Methylmethacrylat, Ethylacrylat, Ethylmethacrylat, Propylacrylat, Propylmethacrylat, n-Butylacrylat, n-Butylmethacrylat, 2-Ethylhexylacrylat, Styrol und Silikonmakromer.

Am meisten bevorzugt werden Vinylacetat und Gemische von Vinylacetat mit Silikonmakromer;
Gemische von Vinylacetat, einem Vinylester von α-verzweigten Monocarbonsäuren mit 9 bis 11 C-Atomen und/oder Ethylen und gegebenenfalls Silikonmakromer;
Gemische von n-Butylacrylat mit 2-Ethylhexylacrylat und/oder Methylmethacrylat und gegebenenfalls Silikonmakromer; Gemische von Styrol mit einem oder mehreren Monomeren aus der Gruppe Methylacrylat, Ethylacrylat, Propylacrylat, n-Butylacrylat, 2-Ethylhexylacrylat und gegebenenfalls Silikonmakromer;
Gemische von Vinylacetat mit einem oder mehreren Monomeren aus der Gruppe Methylacrylat, Ethylacrylat, Propylacrylat, n-Butylacrylat, 2-Ethylhexylacrylat und gegebenenfalls Ethylen und gegebenenfalls Silikonmakromer.

Die radikalisch initiierte Polymerisation der ethylenisch ungesättigten Monomeren kann grundsätzlich mit allen hierfür bekannten Polymerisationsverfahren erfolgen, wie Massepolymerisation, Lösungspolymerisation, Fällungspolymerisation, Suspensionspolymerisation in Wasser und Emulsionspolymerisation in Wasser.

Die Polymerisationstemperatur beträgt im allgemeinen 30°C bis 100°C, vorzugsweise 50°C bis 90°C. Bei der Copolymerisation von gasförmigen Comonomeren wie Ethylen, 1,3-Butadien oder Vinylchlorid kann auch unter Druck, im allgemeinen zwischen 1 bar und 100 bar, gearbeitet werden.

Die Initiierung der Polymerisation erfolgt mit den gebräuchlichen wasserlöslichen bzw. monomer-/öllöslichen Initiatoren oder Redox-Initiator-Kombinationen. Beispiele für wasserlösliche Initiatoren sind die Natrium-, Kalium- und Ammoniumsalze der Peroxodischwefelsäure, Wasserstoffperoxid, t-Butylhydroperoxid, Kaliumperoxodiphosphat, Cumolhydroperoxid, Isopropylbenzolmonohydroperoxid, oder wasserlösliche Azo-Initiatoren (wie Wako V-50).
Beispiele für monomerlösliche Initiatoren sind Dicetylperoxydicarbonat, Di-(2-ethylhexyl)peroxydicarbonat, 1,1-Bis(t-Butylperoxy)-3,3,5-trimethylcyclohexan, Di-(4-t-Butylcyclohexyl)peroxydicarbonat, Dicyclohexylperoxydicarbonat, Dibenzoylperoxid, Dilauroylperoxid, t-Amylperoxypivalat, t-Butylperneodecanoat, t-Butyl-per-2-ethylhexanoat, t-Butylperpivalat oder Azoinitiatoren wie AIBN.

Die genannten Initiatoren werden im allgemeinen in einer Menge von 0.01 bis 10.0 Gew.-%, bevorzugt 0.1 bis 1.0 Gew.-%, jeweils bezogen auf das Gesamtgewicht der Monomere, eingesetzt. Als Redox-Initiatoren verwendet man Kombinationen aus den genannten Initiatoren in Kombination mit Reduktionsmitteln. Geeignete Reduktionsmittel sind die Sulfite und Bisulfite der Alkalimetalle und von Ammonium, beispielsweise Natriumsulfit, die Derivate der Sulfoxylsäure wie Zink- oder Alkaliformaldehydsulfoxylate, beispielsweise Natriumhydroxymethansulfinat, und Ascorbinsäure. Die Reduktionsmittelmenge beträgt im allgemeinen 0.01 bis 10.0 Gew.-%, bevorzugt 0.1 bis 1.0 Gew.-%, jeweils bezogen auf das Gesamtgewicht der Monomere.

Bei der Lösungspolymerisation werden organische Lösungsmittel wie zum Beispiel Tetrahydrofuran, Diethylether, Petrolether, Methylacetat, Ethylacetat, Methylethylketon, Aceton, Isopropanol, Propanol, Ethanol, Methanol, Cyclohexan, Toluol oder Benzol verwendet.

Bei den genannten Verfahren der Suspensions- und Emulsionspolymerisation wird in Gegenwart von oberflächenaktiven Substanzen wie Schutzkolloiden und/oder Emulgatoren polymerisiert.
Geeignete Schutzkolloide sind beispielsweise teilverseifte Polyvinylalkohole, Polyvinylpyrrolidone, Polyvinylacetale, Stärken, Cellulosen und deren Carboxymethyl-, Methyl-, Hydroxyethyl-, Hydroxypropyl-Derivate.
Geeignete Emulgatoren sind sowohl anionische, kationische als auch nicht-ionische Emulgatoren, beispielsweise anionische Tenside, wie Alkylsulfate mit einer Kettenlänge von 8 bis 18 C-Atomen, Alkyl- oder Alkylarylethersulfate mit 8 bis 18 C-Atomen im hydrophoben Rest und bis zu 60 Ethylen- oder Propylenoxideinheiten, Alkyl- oder Alkylarylsulfonate mit 8 bis 18 C-Atomen, Ester und Halbester der Sulfobernsteinsäure mit einwertigen Alkoholen oder Alkylphenolen, oder nichtionische Tenside wie Alkylpolyglykolether oder Alkylarylpolyglykolether mit bis zu 60 Ethylenoxid- bzw. Propylenoxid-Einheiten.

Die Monomere können insgesamt vorgelegt werden, insgesamt zudosiert werden oder in Anteilen vorgelegt werden und der Rest nach der Initiierung der Polymerisation zudosiert werden. Die Dosierungen können separat (räumlich und zeitlich) durchgeführt werden oder die zu dosierenden Komponenten können alle oder teilweise voremulgiert dosiert werden.

Die als Polymerisationsregler verwendeten Aldehyd-funktionellen Silikone können insgesamt vorgelegt werden, insgesamt zudosiert werden oder in Anteilen vorgelegt werden und der Rest zudosiert werden. Vorzugsweise wird ein Teil vorgelegt und der Rest zudosiert. Besonders bevorzugt werden Regler und Monomere so zugegeben, dass deren molares Verhältnis während der Polymerisation gleich bleibt. Mit dieser Maßnahme erhält man eine homogene Molekulargewichtsverteilung und ein homogenes Polymerisat. Im allgemeinen werden die Aldehyd-funktionellen Silikone in einer Menge von 0.1 bis 40 Gew.-%, vorzugsweise 1.0 bis 20 Gew.-%, jeweils bezogen auf das Gesamtgewicht der Monomere, eingesetzt.

Neben den als Regler verwendeten Aldehyd-funktionellen Silikonen können auch zusätzlich weitere Regler auf Basis von silanhaltigen Verbindungen oder von Aldehyden eingesetzt werden. Nach Abschluss der Polymerisation können Restmonomere und flüchtige Komponenten mittels Nachpolymerisation, Destillation, Durchleiten von Inertgas bzw. Wasserdampf oder einer Kombination dieser Massnahmen entfernt werden.

Zur Herstellung von in Wasser redispergierbaren Polymerpulvern können die wässrigen Dispersionen, welche mittels Emulsions- und Suspensionspolymerisation zugänglich werden, nach Zusatz von Schutzkolloiden als Verdüsungshilfe, in bekannter Weise sprühgetrocknet werden.

Werden als Monomere Vinylester, insbesondere Vinylacetat, eingesetzt, so können die daraus resultierenden Silikonorganocopolymere zu Silikon-haltigen Polyvinylalkoholen verseift werden. Vorzugsweise werden die dabei eingesetzten Polyvinylester-Edukte nach dem Masse- oder Lösungspolymerisationsverfahren hergestellt. Zur Herstellung der Verseifungsprodukte wird das Silikon-haltige Polymere in dem Fachmann bekannter Weise in alkoholischer Lösung verseift, wobei die dabei üblichen sauren oder alkalischen Katalysatoren eingesetzt werden. Geeignete Lösungsmittel sind aliphatische Alkohole mit 1 bis 6 C-Atomen, vorzugsweise Methanol oder Ethanol. Die Verseifung kann aber auch in einer Mischung bestehend aus Wasser und a-liphatischem Alkohol durchgeführt werden. Saure Katalysatoren sind beispielweise starke Mineralsäuren, wie Salzsäure oder Schwefelsäure, oder starke organische Säuren, wie aliphatische oder aromatische Sulphonsäuren. Bevorzugt werden alkalische Katalysatoren eingesetzt. Dies sind beispielweise die Hydroxide, Alkoholate und Carbonate von Alkali- oder Erdalkalimetallen. Die Katalysatoren werden in Form deren wässrigen oder alkoholischen Lösungen eingesetzt. Die eingesetzten Mengen an alkalischem Katalysator betragen im allgemeinen 0.2 bis 20.0 Mol-%, bezogen auf Silikonorganocopolymer.

Die Verseifung wird im allgemeinen bei Temperaturen von 20°C bis 70°C, vorzugsweise 30°C bis 60°C, durchgeführt. Durch Zugabe der Katalysatorlösung wird die Umesterung initiiert. Bei Erreichen des gewünschten Hydrolysegrades, im allgemeinen zwischen 40 und 100 Mol-%, wird die Umesterung abgebrochen. Bei sauer katalysierter Umesterung erfolgt der Abbruch durch Zugabe von alkalischen Reagentien. Bei der bevorzugten alkalisch katalysierten Umesterung erfolgt der Abbruch, d.h. die Neutralisation, durch Zugabe von sauren Reagentien, wie Carbonsäuren oder Mineralsäuren. Nach Beendigung der Verseifungsreaktion wird das Produkt von der flüssigen Phase abgetrennt. Dies kann mittels gebräuchlicher Vorrichtungen zur Fest/Flüssig-Trennung erfolgen, beispielsweise mittels Zentrifugation oder Filtration.

In einem nächsten Schritt können die Silikon-haltigen Polyvinylalkohole noch mit Aldehyden zu Silikon-haltigen Polyvinylacetalen acetalisiert werden. Zur Acetalisierung werden die teil- oder vollverseiften Silikon-haltigen Polyvinylester vorzugsweise in wässrigem Medium aufgenommen. Üblicherweise wird ein Festgehalt der wässrigen Lösung von 5 bis 40 Gew.-% eingestellt. Die Acetalisierung erfolgt in Gegenwart von sauren Katalysatoren wie Salzsäure, Schwefelsäure, Salpetersäure oder Phosphorsäure. Vorzugsweise wird durch Zugabe von Salzsäure der pH-Wert der Lösung auf Werte < 1 eingestellt. Nach Zugabe des Katalysators wird die Lösung auf vorzugsweise -10°C bis +20°C abgekühlt. Die Acetalisierungsreaktion wird durch Zugabe des Aldehydanteils gestartet.

Bevorzugte Aldehyde aus der Gruppe der aliphatischen Aldehyde mit 1 bis 15 C-Atomen sind Formaldehyd, Acetaldehyd, Propionaldehyd und am meisten bevorzugt Butyraldehyd, oder eine Mischung aus Butyraldehyd und Acetaldehyd. Als aromatische Aldehyde können beispielsweise Benzaldehyd oder dessen Derivate verwendet werden. Die Zugabemenge an Aldehyd richtet sich dabei nach dem erwünschten Acetalisierungsgrad. Da die Acetalisierung mit fast vollständigem Umsatz abläuft, kann die Zugabemenge durch einfache stöchiometrische Rechnung bestimmt werden. Die Acetalisierung wird nach Abschluß der Zugabe des Aldehyds durch Erwärmen des Ansatzes auf 10°C bis 60°C und mehrstündigem Rühren, vorzugsweise 1 bis 6 Stunden, vervollständigt, und das pulverförmige Reaktionsprodukt wird durch Filtration und nachgeschaltetem Waschschritt isoliert.

Die mit dieser Erfindung zugänglichen Silikon-haltigen Polymerisate können sehr gewinnbringend in den dafür typischen Anwendungsbereichen eingesetzt werden.

Die mittels Masse-, Lösungs-, Emulsions- und Suspensionspolymerisation zugänglichen Silikon-haltigen Polymerisate und deren Lösungen eignen sich als Trenn- und Beschichtungsmittel. Beispielsweise zur Herstellung von abhäsiven (nicht klebenden) Überzügen im Release-Coating. Sie sind auch geeignet zur Beschichtung von Textil, Papier, Kunststoffen (z.B. Folien), Holz und Metallen, beispielsweise als Schutzbeschichtung oder als Antifouling-Beschichtung. Ein weiteres Anwendungsgebiet ist der Bautenschutz, insbesondere zur Herstellung von witterungsbeständigen Beschichtungen oder Dichtstoffen. Sie sind auch als Modifizierungs- und Hydrophobierungsmittel geeignet und als Additiv für Kosmetika, wie Haarsprays, Haarfixiermittel, Cremes, Shampoos oder Lotionen. Weitere Anwendungen sind die in Klebstoffen, als Bindemittel in Lacken und Druckfarben, und in vernetzbaren Dichtmitteln (Sealants).

Wässrige Dispersionen oder redispergierbare Dispersionspulver können beispielsweise in bauchemischen Produkten, gegebenenfalls in Verbindung mit hydraulisch abbindenden Bindemitteln wie Zementen (Portland-, Aluminat-, Trass-, Hütten-, Magnesia-, Phosphatzement), Gips, Wasserglas, für die Herstellung von Bauklebern, insbesondere Fliesenkleber und Vollwärmeschutzkleber, Putzen, Spachtelmassen, Fussbodenspachtelmassen, Verlaufsmassen, Dichtschlämmen, Fugenmörtel und Farben eingesetzt werden. Ferner als Bindemittel für Beschichtungsmittel und Klebemittel oder als Beschichtungs- und Bindemittel für Textilien, Kunststoffen, Metallen, Fasern, Holz und Papier.

Die eingangs genannten Probleme bei der Herstellung von Silikon-haltigen Polymerisaten können durch den Einsatz von Silikonen, die Aldehydgruppen tragen, gelöst werden. Bei der radikalischen Emulsionspolymerisation wird die Anknüpfung von organischen Monomeren verbessert, bei Einsatz in der Suspensionspolymerisation erfolgt ebenfalls sehr gute Anknüpfung und es resultieren unvernetzte Produkte, da das mit Aldehydgruppen funktionalisierte Silikon sehr gut regelt.

Insbesondere kann man aber mit dem Einsatz dieser Aldehyd-funktionellen Silikone das Vernetzungsproblem bei der radikalischen Lösungspolymerisation lösen, wenn mehrfach ungesättigte Silikonmakromere mit organischen Monomeren polymerisiert werden.

Mit den Aldehyd-funktionellen Silikonen stehen also bei radikalischen Polymerisationsreaktionen Edukte zur Verfügung, aus denen in einer sehr einfachen Weise Silikonorganocopolymere hergestellt werden können, die ein sehr vorteilhaftes Eigenschaftsprofil aufweisen. So ist es darüber hinaus zum Beispiel auch möglich, bei Verwendung von geeigneten Mischungen von Silikonmakromeren und Aldehyd-funktionellen Silikonen das Molekulargewicht, die Viskosität, den Vernetzungsgrad und die mechanischen Eigenschaften des Silikonorganocopolymeren in einem breiten Ausmaß zu variieren.

Die nachfolgenden Beispiele dienen zur weiteren Erläuterung der Erfindung, ohne diese in irgendeiner Weise einzuschränken.

### Beispiele:

### Regler (Aldehyd-funktionelles Silikon):

α,ω-Di-Aldehyd-funktionalisiertes Silikonöl mit ca. 59 SiOMe₂-Wiederholungseinheiten. Hersteller: Wacker-Chemie GmbH

### Silikonmakromer:

Polydimethylsiloxan mit ca. 100 SiOMe₂-Wiederholungseinheiten, α,ω-divinylfunktionalisiert (VIPO 200). Hersteller: Wacker-Chemie GmbH

### Vergleichsbeispiel 1 (ohne Regler, mit Silikonmakromer):

In einem 11-Glasrührtopf mit Ankerrührer, Rückflußkühler und Dosiereinrichtungen wurden 337.11 g Ethylacetat, 8.9 g VIPO 200, 0.77 g PPV (t-Butylperpivalat, 75 %-ige Lösung in Aliphaten) und 35.64 g Vinylacetat vorgelegt. Anschließend wurde die Vorlage bei einer Rührerdrehzahl von 150 Upm auf 70°C aufgeheizt.
Nach Erreichen der Innentemperatur von 70°C wurde die Initiatordosierung (60.14 g Ethylacetat und 2.98 g PPV) mit einer Rate von 13.6 ml/h gestartet. Zehn Minuten nach dem Start der Initiatordosierung wurde die Monomerdosierung (71.29 g VIPO 200 und 285.11 g Vinylacetat) mit einer Rate von 95 ml/h eingefahren.
Die Initiatordosierung sollte sich über einen Zeitraum von 310 Minuten erstrecken, die Monomerdosierung sollte 60 Minuten früher enden. Jedoch trat bereits nach 145 Minuten Dosierzeit der Monomerdosierung eine deutliche Vernetzung und damit einhergehend ein enormer Viskositätsanstieg auf, weswegen der Ansatz frühzeitig abgebrochen wurde (d.h. die Dosierungen wurden eingestellt), da er nicht mehr ausreichend gerührt werden konnte.
Nach dem Abbruch wurde noch 60 Minuten bei 70°C nachpolymerisiert. Die erhaltene Polymerlösung wurde anschließend im Rotationsverdampfer unter Erwärmen zur Trockne eingeengt. Nach dem Abkühlen auf Raumtemperatur wurde ein trübes, vernetztes Harz erhalten.
Analysen: FG: 98.7 %, Viskosität (Höppler, 10 %-ige Lösung in Ethylacetat) = 56.9 mPas, SEC M_{w} = 277000, Mₙ = 16800, Polydispersität = 16.5; Glasübergangstemperatur (Tg): Tg = 31.3°C; K-Wert (1 %-ige Lösung in Aceton) = 38.3

### Vergleichsbeispiel 2 (ohne Regler, ohne Silikonmakromer):

In einem 11-Glasrührtopf mit Ankerrührer, Rückflußkühler und Dosiereinrichtungen wurden 343.35 g Ethylacetat, 0.78 g PPV (t-Butylperpivalat, 75 %-ige Lösung in Aliphaten) und 45.37 g Vinylacetat vorgelegt. Anschließend wurde die Vorlage bei einer Rührerdrehzahl von 150 Upm auf 70°C aufgeheizt. Nach Erreichen der Innentemperatur von 70°C wurde die Initiatordosierung (61.25 g Ethylacetat und 3.03 g PPV) mit einer Rate von 13.8 ml/h gestartet. Zehn Minuten nach dem Start der Initiatordosierung wurde die Monomerdosierung (362.99 g Vinylacetat) mit einer Rate von 98 ml/h eingefahren. Die Initiatordosierung erstreckte sich über einen Zeitraum von 310 Minuten, die Monomerdosierung endete 60 Minuten früher. Nach dem Ende der Initiatordosierung wurde noch 60 Minuten bei 70°C nachpolymerisiert. Die erhaltene Polymerlösung wurde anschließend im Rotationsverdampfer unter Erwärmen zur Trockne eingeengt. Nach dem Abkühlen auf Raumtemperatur wurde ein transparentes Harz erhalten.
Analysen: FG: 99.6 %, Viskosität (Höppler, 10 %-ige Lösung in Ethylacetat) = 2.6 mPas, SEC M_{w} = 41000, Mₙ= 15300, Polydispersität = 2.7; Glasübergangstemperatur (Tg): Tg = 35.5°C; K-Wert (1 %-ige Lösung in Aceton) = 19.6

### Beispiel 3 (mit Regler und Silikonmakromer):

In einem 11-Glasrührtopf mit Ankerrührer, Rückflußkühler und Dosiereinrichtungen wurden 211.02 g Ethylacetat, 0.48 g PPV (t-Butylperpivalat, 75 %-ige Lösung in Aliphaten), 2.79 g Regler (α,ω-Dialdehyd-PDMS), 2.79 g VIPO 200 und 22.31 g Vinylacetat vorgelegt. Anschließend wurde die Vorlage bei einer Rührerdrehzahl von 150 Upm auf 70°C aufgeheizt. Nach Erreichen der Innentemperatur von 70°C wurde die Initiatordosierung (37.65 g Ethylacetat und 1.86 g PPV) mit einer Rate von 8.5 ml/h gestartet. Zehn Minuten nach dem Start der Initiatordosierung wurde die Monomerdosierung (22.31 g Regler α,ω-Dialdehyd-PDMS, 22.31 g VIPO 200 und 178.47 g Vinylacetat) mit einer Rate von 59 ml/h eingefahren. Die Initiatordosierung erstreckte sich über einen Zeitraum von 310 Minuten, die Monomerdosierung endete 60 Minuten früher.
Nach dem Ende der Initiatordosierung wurde noch 60 Minuten bei 70°C nachpolymerisiert. Die erhaltene Polymerlösung wurde anschließend im Rotationsverdampfer unter Erwärmen zur Trockne eingeengt. Nach dem Abkühlen auf Raumtemperatur wurde ein leicht trübes Harz erhalten.
Analysen: FG: 99.4 %, Viskosität (Höppler, 10 %-ige Lösung in Ethylacetat) = 4.5 mPas, SEC M_{w} = 112000, Mₙ = 22200, Polydispersität = 5.0; Glasübergangstemperatur (Tg): Tg = 30.2°C; K-Wert (1 %-ige Lösung in Aceton) = 25.8; Zusammensetzung des Silikonorganocopolymeren nach 1-H-NMR-Spektroskopie: 78.34 Gew.-% PVAc, 21.66 Gew.-% Silikon

### Beispiel 4 (mit Regler, ohne Silikonmakromer):

In einem 11-Glasrührtopf mit Ankerrührer, Rückflußkühler und Dosiereinrichtungen wurden 211.35 g Ethylacetat, 0.48 g PPV (t-Butylperpivalat, 75 %-ige Lösung in Aliphaten), 5.58 g Regler (α,ω-Dialdehyd-PDMS) und 22.35 g Vinylacetat vorgelegt. Anschließend wurde die Vorlage bei einer Rührerdrehzahl von 150 Upm auf 70°C aufgeheizt. Nach Erreichen der Innentemperatur von 70°C wurde die Initiatordosierung (37.71 g Ethylacetat und 1.87 g PPV) mit einer Rate von 8.5 ml/h gestartet. Zehn Minuten nach dem Start der Initiatordosierung wurde die Monomerdosierung (44.69 g Regler α,ω-Dialdehyd-PDMS und 178.75 g Vinylacetat) mit einer Rate von 59 ml/h eingefahren. Die Initiatordosierung erstreckte sich über einen Zeitraum von 310 Minuten, die Monomerdosierung endete 60 Minuten früher.
Nach dem Ende der Initiatordosierung wurde noch 60 Minuten bei 70°C nachpolymerisiert. Die erhaltene Polymerlösung wurde anschließend im Rotationsverdampfer unter Erwärmen zur Trockne eingeengt. Nach dem Abkühlen auf Raumtemperatur wurde ein fast transparentes Harz erhalten.
Analysen: FG: 99.3 %, Viskosität (Höppler, 10 %-ige Lösung in Ethylacetat) = 2.1 mPas, SEC M_{w} = 32500, Mₙ = 12000, Polydispersität = 2.7; Glasübergangstemperatur (Tg): Tg = 29.4°C; K-Wert (1 %-ige Lösung in Aceton) = 17.1; Zusammensetzung des Silikonorganocopolymeren nach 1-H-NMR-Spektroskopie: 79.00 Ges.-% PVAc, 21.00 Gew.-% Silikon

### Auswertung der Analyseergebnisse:

In Vergleichsbeipiel 2 wurde Vinylacetat in Ethylacetat zu Polyvinylacetat polymerisiert, es resultierte ein Harz mit einer Viskosität von 2.6 mPas (10 %-ig in EtAc). Vergleichsbeispiel 2 ist als Blindwert ohne Silikonanteile zu sehen.
In Vergleichsbeispiel 1 wurde im Vergleich zu Vergleichsbeispiel 2 (Blindwert) neben Vinylacetat (VAc) (80 Gew.-%) ein Silikonmakromer mit 2 ungesättigten polymerisierbaren Gruppen (20 Gew.-%) eingesetzt, wobei das Polymerisationsverfahren unverändert blieb. Die Polymerisation führte zu einem vernetzten, gequollenem und trüben Produkt, das unbrauchbar war; die Dosierungen konnten nicht zu Ende gefahren werden. Das Silikonorganocopolymer hatte eine Viskosität von 56.9 mPas (10 %-ig in EtAc), was fast der 22-fache Wert des Blindwerts aus Vergleichsbeispiel 2 war.
Beispiel 3 belegt, dass die Vernetzung durch Zugabe von Aldehyd-funktionellen Silikonen bei der Polymerisation von mehrfach ungesättigten Silikonmakromeren vermieden werden kann. Mit einer Mischung von 10 Gew.-% Aldehyd-funktionellem Silikon und 10 Gew.-% 2-fach ungesättigtem Silikonmakromer bei 80 Gew.-% VAc wurde ein unvernetztes, deutlich transparenteres Silikonorganocopolymer enthalten, das eine Viskosität (10 %-ig in EtAc) von nur mehr 4.5 mPas aufwies, was lediglich dem 1.7-fachen des Blindwerts aus Vergleichsbeispiel 2 entspricht. Im Vergleich zu Vergleichsbeispiel 1 nahm die Viskosität (10 %-ig in EtAc) bei dem Ansatz aus Beispiel 3 um den Faktor 12.6 ab. Die exzellente regelnde Wirkung von Aldehyd-funktionellen Silikonen und damit deren besondere Eignung als Polymerisationsregler zur Herstellung von Silikonorganocopolymeren unterstreicht Beispiel 4. Hier wurden 20 Gew.-% Aldehyd-funktionelles Silikon mit 80 Gew.-% VAc polymerisiert. Es resultierte ein nahezu transparentes Harz mit einer Viskosität (10 %-ig in EtAc) von nur 2.1 mPas. Im Vergleich zum Blindwert aus Vergleichsbeispiel 2 liegt die Viskosität hier sogar noch niedriger. Da ein nahezu transparentes Harz (im Gegensatz zu Vergleichsbeispiel 1) erhalten wurde, führte der Einsatz von Aldehyd-funktionellen Silikonen offensichtlich auch zu einer besseren Verträglichkeit zwischen organischem Polymeranteil und Silikonanteil. Die Phasenseparation wird deutlich eingeschränkt bzw. sogar nahezu vermieden, was als weiterer Vorteil für die Verwendung von Aldehyd-funktionellen Silikonen bei radikalischen Polymerisationsreaktionen zu werten ist.
Auch ¹H-NMR-Untersuchungen belegen die gute regelnde Wirkung von Aldehyd-funktionellen Silikonen bei deren Verwendung in radikalischen Polymerisationsreaktionen. So zeigte sich bei den Reaktionen in den Beispielen 3 und 4, dass nach der Polymerisation im Mittel mehr als 80 % der ursprünglich im Molekül vorhandenen Aldehyd-Funktionen verschwunden sind, weil das H-Atom in dieser Funktion an Übertragungsreaktionen teilgenommen hat.

## Patentansprüche

1. Verfahren zur Herstellung von Silikon-haltigen Polymerisaten mittels radikalischer Polymerisation von einem oder mehreren ethylenisch ungesättigten, organischen Monomeren, in Gegenwart von Kupfer-freiem Radikalstarter und einem oder mehreren Polymerisationsreglern, **dadurch gekennzeichnet, dass** als Polymerisationsregler verzweigte, cyclische oder dreidimensional vernetzte Polysiloxane mit mindestens 2 Siloxanwiederholungseinheiten, welche mindestens eine endständige und/oder kettenständige Aldehydgruppe enthalten, eingesetzt werden oder Silikone der allgemeinen Formeln
HCO(CH₂)₂-SiR₂O-[SiR₂O-]ₓ-SiR₂-(CH₂)₂-CHO (I),
und/oder
R₃Si-O-[SiR₂O-]_{y}-[Si(HCO(CH₂)₂)RO]_{z}-SiR₃ (II),
eingesetzt werden, wobei jeweils R gleich oder verschieden ist, und einen einwertigen, gegebenenfalls substituierten, Alkylrest oder Alkoxyrest mit jeweils 1 bis 18 C-Atomen bedeutet, x ≥ 1 ist, y ≥ 0 ist, z ≥ 1 ist.

2. Verfahren nach Anspruch 1, **dadurch gekennzeichnet, dass** der Rest R ein einwertiger Alkylrest oder einwertiger Alkoxyrest mit jeweils 1 bis 6 Kohlenstoffatomen ist.

3. Verfahren nach Anspruch 1 oder 2, **dadurch gekennzeichnet, dass**, x = 1 bis 10000, y = 0 bis 1000, z = 1 bis 1000.

4. Verfahren nach Anspruch 1 bis 3, **dadurch gekennzeichnet, dass** als ethylenisch ungesättigte, organische Monomere ein oder mehrere Monomere polymerisiert werden, aus der Gruppe umfassend Vinylester von unverzweigten-oder verzweigten Alkylcarbonsäuren mit 1 bis 18 C-Atomen, Acrylsäureester oder Methacrylsäureester von verzweigten oder unverzweigten Alkoholen oder Diolen mit 1 bis 18 C-Atomen, ethylenisch ungesättigte Mono- und Di-Carbonsäuren, deren Salze, sowie deren Amide und N-Methylolamide und Nitrile, ethylenisch ungesättigte Sulfonsäuren sowie deren Salze, ethylenisch ungesättigte heterocyclische Verbindungen, Alkylvinylether, Vinylketone, Diene, Olefine, Vinylaromaten, und Vinylhalogenide.

5. Verfahren nach Anspruch 4, **dadurch gekennzeichnet, dass** als ethylenisch ungesättigte, organische Monomere ein oder mehrere Monomere polymerisiert werden, aus der Gruppe umfassend
Vinylacetat und Gemische von Vinylacetat mit Silikonmakromer,
Gemische von Vinylacetat, einem Vinylester von αverzweigten Monocarbonsäuren mit 9 bis 11 C-Atomen und/oder Ethylen und gegebenenfalls Silikonmakromer, Gemische von n-Butylacrylat mit 2-Ethylhexylacrylat und/- oder Methylmethacrylat und gegebenenfalls Silikonmakromer,
Gemische von Styrol mit einem oder mehreren Monomeren aus der Gruppe Methylacrylat, Ethylacrylat, Propylacrylat, n-Butylacrylat, 2-Ethylhexylacrylat und gegebenenfalls Silikonmakromer,
Gemische von Vinylacetat mit einem oder mehreren Monomeren aus der Gruppe Methylacrylat, Ethylacrylat, Propylacrylat, n-Butylacrylat, 2-Ethylhexylacrylat und gegebenenfalls
Ethylen und gegebenenfalls Silikonmakromer.

6. Verfahren nach Anspruch 1 bis 5, **dadurch gekennzeichnet, dass** die Polymerisation der ethylenisch ungesättigten, organischen Monomere in Gegenwart von Silikonmakromer erfolgt, aus der Gruppe umfassend lineare, verzweigte, cyclische und dreidimensional vernetzte Silikone mit mindestens 5 Siloxanwiederholungseinheiten und mit mindestens einer radikalisch polymerisierbaren funktionellen Gruppe.

7. Verfahren nach Anspruch 6, **dadurch gekennzeichnet, dass** Silikonmakromere eingesetzt werden, mit der allgemeinen Formel R¹ₐR₃₋ₐSiO(SiR₂O)ₙSiR₃₋ₐR¹ₐ, wobei R gleich oder verschieden ist, und einen einwertigen, gegebenenfalls substituierten, Alkylrest oder Alkoxyrest mit jeweils 1 bis 18 C-Atomen bedeutet, R¹ eine polymerisierbare Gruppe bedeutet, a 0 oder 1 ist, und n = 5 bis 10000 beträgt.

8. Verfahren nach Anspruch 1 bis 7, **dadurch gekennzeichnet, dass** dabei erhaltene, Vinylester-Einheiten enthaltende, Silikon-haltige Polymerisate verseift werden.

9. Verfahren nach Anspruch 8, **dadurch gekennzeichnet, dass** die dabei erhaltenen Verseifungsprodukte acetalisiert werden.

10. Verfahren nach Anspruch 1 bis 7, **dadurch gekennzeichnet, dass** die nach Polymerisation in Wasser erhaltenen, Silikon-haltigen Polymerisate zu redispergierbaren Polymerpulvern sprühgetrocknet werden.

## Claims

1. Process for preparing silicone-containing polymers by means of free-radical polymerization of one or more ethylenically unsaturated organic monomers in the presence of copper-free free-radical initiator and one or more polymerization regulators, **characterized in that** polymerization regulators used are branched, cyclic or three-dimensionally crosslinked polysiloxanes having at least 2 repeating siloxane units which contain at least one terminal and/or internal aldehyde group or silicones of the general formulae
HCO(CH₂)₂-SiR₂O-[SiR₂O-]ₓ-SiR₂-(CH₂)₂-CHO (I),
and/or
R₃Si-O-[SiR₂O-]_{y}-[Si(HCO(CH₂)₂)RO]_{z}-SiR₃ (II),
are used, each R being identical or different and being a monovalent, optionally substituted alkyl radical or alkoxy radical having in each case 1 to 18 carbon atoms, x being ≥ 1, y being ≥ 0 and z being ≥ 1.

2. Process according to Claim 1, **characterized in that** the radical R is a monovalent alkyl radical or monovalent alkoxy radical having in each case 1 to 6 carbon atoms.

3. Process according to Claim 1 or 2, **characterized in that** x = 1 to 10 000, y = 0 to 1000 and z = 1 to 1000.

4. Process according to Claims 1 to 3, **characterized in that** ethylenically unsaturated organic monomers polymerized are one or more monomers from the group consisting of vinyl esters of unbranched or branched alkylcarboxylic acids having 1 to 18 carbon atoms, acrylic esters or methacrylic esters of branched or unbranched alcohols or diols having 1 to 18 carbon atoms, ethylenically unsaturated monocarboxylic and dicarboxylic acids, their salts, and also their amides and N-methylol amides and nitriles, ethylenically unsaturated sulphonic acids and their salts, ethylenically unsaturated heterocyclic compounds, alkyl vinyl ethers, vinyl ketones, dienes, olefins, vinylaromatics and vinyl halides.

5. Process according to Claim 4, **characterized in that** ethylenically unsaturated organic monomers polymerized are one or more monomers from the group consisting of
vinyl acetate and mixtures of vinyl acetate with silicone macromer,
mixtures of vinyl acetate, a vinyl ester of α-branched monocarboxylic acids having 9 to 11 carbon atoms and/or ethylene and, if desired, silicone macromer,
mixtures of n-butyl acrylate with 2-ethylhexyl acrylate and/or methyl methacrylate and, if desired, silicone macromer,
mixtures of styrene with one or more monomers from the group of methyl acrylate, ethyl acrylate, propyl acrylate, n-butyl acrylate and 2-ethylhexyl acrylate and, if desired, silicone macromer,
mixtures of vinyl acetate with one or more monomers from the group of methyl acrylate, ethyl acrylate, propyl acrylate, n-butyl acrylate and 2-ethylhexyl acrylate and, if desired,
ethylene and, if desired, silicone macromer.

6. Process according to Claims 1 to 5, **characterized in that** the polymerization of the ethylenically unsaturated organic monomers takes place in the presence of silicone macromer, from the group consisting of linear, branched, cyclic and three-dimensionally crosslinked silicones having at least 5 repeating siloxane units and containing at least one free-radically polymerizable functional group.

7. Process according to Claim 6, **characterized in that** silicone macromers are used having the general formula R¹ₐR₃₋ₐSiO(SiR₂O)ₙSiR₃₋ₐR¹ₐ, R being identical or different and being a monovalent, optionally substituted, alkyl radical or alkoxy radical having in each case 1 to 18 carbon atoms, R¹ being a polymerizable group, a being 0 or 1, and n being = 5 to 10 000.

8. Process according to Claim 1 to 7, **characterized in that** resultant silicone-containing polymers containing vinyl ester units are hydrolysed.

9. Process according to Claim 8, **characterized in that** the resultant hydrolysis products are acetalized.

10. Process according to Claims 1 to 7, **characterized in that** the silicone-containing polymers obtained after polymerization in water are spray-dried to form redispersible polymer powders.

## Revendications

1. Procédé pour la préparation de polymères contenant des silicones, par polymérisation radicalaire d'un ou plusieurs monomères organiques à insaturation éthylénique, en présence d'un amorceur de radicaux exempt de cuivre et d'un ou plusieurs régulateurs de polymérisation, **caractérisé en ce qu'**on utilise comme régulateurs de polymérisation des polysiloxanes ramifiés, cycliques ou réticulés en trois dimensions, comportant au moins 2 motifs répétitifs siloxane qui contiennent au moins un groupe aldéhyde en bout de chaîne et/ou sur la chaîne, ou des silicones de formule générale
HCO(CH₂)₂-SiR₂O-[SiR₂O-]ₓ-SiR₂-(CH₂)₂-CHO (I)
et/ou
R₃Si-O-[SiR₂O-]_{y}-[Si(HCO(CH₂)₂)RO]_{z}-SiR₃ (II),
R étant identique ou différent, et représentant un radical alkyle ou alcoxy monovalent éventuellement substitué ayant chacun de 1 à 18 atomes de carbone, x étant ≥ 1, y étant ≥ 0, z étant ≥ 1.

2. Procédé selon la revendication 1, **caractérisé en ce que** R est un radical alkyle monovalent ou un radical alcoxy monovalent ayant chacun de 1 à 6 atomes de carbone.

3. Procédé selon la revendication 1 ou 2, **caractérisé en ce que** x = 1 à 10 000, y = 0 à 1 000, z = 1 à 1 000.

4. Procédé selon l'une quelconque des revendications 1 à 3, **caractérisé en ce qu'**on polymérise en tant que monomères organiques à insaturation éthylénique un ou plusieurs monomères choisis dans le groupe comprenant les esters vinyliques d'acides alkylcarboxyliques ramifiés ou non ramifiés ayant de 1 à 18 atomes de carbone, les esters d'acide acrylique ou les esters d'acide méthacrylique avec des alcools ou diols ramifiés ou non ramifiés ayant de 1 à 18 atomes de carbone, les acides mono- ou dicarboxyliques à insaturation éthylénique, leurs sels, ainsi que leurs amides et N-méthylolamides et nitriles, les acides sulfoniques à insaturation éthylénique ainsi que leurs sels, les composés hétérocycliques à insaturation éthylénique, les alkylvinyléthers, les vinylcétones, les diènes, les oléfines, les composés vinylaromatiques et les halogénures de vinyle.

5. Procédé selon la revendication 4, **caractérisé en ce qu'**on polymérise en tant que monomères organiques à insaturation éthylénique un ou plusieurs monomères choisis dans le groupe comprenant
l'acétate de vinyle et des mélanges d'acétate de vinyle et d'un macromère silicone,
des mélanges d'acétate de vinyle, d'un ester vinylique d'acides monocarboxyliques α-ramifiés ayant de 9 à 11 atomes de carbone et/ou d'éthylène et éventuellement d'un macromère silicone,
des mélanges d'acrylate de n-butyle et d'acrylate de 2-éthylhexyle et/ou de méthacrylate de méthyle et éventuellement d'un macromère silicone,
des mélanges de styrène et d'un ou plusieurs monomères choisis dans le groupe constitué par l'acrylate de méthyle, l'acrylate d'éthyle, l'acrylate de propyle, l'acrylate de n-butyle, l'acrylate de 2-éthylhexyle et éventuellement d'un macromère silicone,
des mélanges d'acétate de vinyle et d'un ou plusieurs monomères choisis dans le groupe constitué par l'acrylate de méthyle, l'acrylate d'éthyle, l'acrylate de propyle, l'acrylate de n-butyle, l'acrylate de 2-éthylhexyle et éventuellement
l'éthylène et éventuellement un macromère silicone.

6. Procédé selon l'une quelconque des revendications 1 à 5, **caractérisé en ce qu'**on effectue la polymérisation des monomères organiques à insaturation éthylénique en présence d'un macromère silicone choisi dans le groupe comprenant les silicones linéaires, ramifiées, cycliques et réticulées en trois dimensions, comportant au moins 5 motifs répétitifs siloxane et comportant au moins un groupe fonctionnel polymérisable par voie radicalaire.

7. Procédé selon la revendication 6, **caractérisé en ce qu'**on utilise des macromères silicone de formule générale R¹ₐR₃₋ₐSiO(SiR₂O)ₙSiR₃₋ₐR¹ₐ, R étant identique ou différent, et représentant un radical alkyle ou un radical alcoxy monovalent, ayant chacun de 1 à 18 atomes de carbone, éventuellement substitués, R¹ représentant un groupe polymérisable, a étant 0 ou 1, et n = 5 à 10 000.

8. Procédé selon l'une quelconque des revendications 1 à 7, **caractérisé en ce que** les polymères contenant un silicone et contenant des unités ester vinylique, ainsi obtenus, sont saponifiés.

9. Procédé selon la revendication 8, **caractérisé en ce que** les produits de saponification ainsi obtenus sont acétalisés.

10. Procédé selon l'une quelconque des revendications 1 à 7, **caractérisé en ce que** les polymères contenant une silicone, obtenus après polymérisation dans l'eau, sont séchés par atomisation en poudres de polymères redispersables.
